# EUROPEAN PATENT APPLICATION

(11) **EP 4 667 180 A1**
(43) Date of publication of application: **24.12.2025**
(21) Application number: 25182430.6
(22) Date of filing: 12.06.2025
(51) Int. Cl.: B29C 31/08, B29C 70/38, B29C 70/54, B32B 5/26, B32B 38/18, B65G 47/91

(54) **PICK AND PLACE END EFFECTOR**

(30) Priority: 21.06.2024 US 202418750755
(71) Applicant: The Boeing Company, Arlington, VA 22202 (US)
(72) Inventor: Chowdhury, Nayeem Tawqir, Arlington, 22202 (US)
(74) Representative: Arnold & Siedsma

(57) **Abstract**

An end effector configured to lift composite material through two different mechanisms and methods of picking and placing composite material are presented. The end effector comprises a vacuum end effector with a plurality of vacuum pogos configured to pick and place a composite preform in contact with the plurality of vacuum pogos, and an electrostatic membrane configured to be removably held by the plurality of vacuum pogos and pick and place a single ply composite material while the electrostatic membrane is held by the plurality of vacuum pogos.

## Description

### BACKGROUND INFORMATION

### 1. Field:

The present disclosure relates generally to an end effector and more specifically to a pick and place end effector configured to use two different lift mechanisms.

### 2. Background:

During composite manufacturing, composite plies are laid up and then transported either as single plies or as a stack of a plurality of composite plies. If hand layup is used, a technician places each individual ply on a substrate at a precise location relative to other plies. Hand layup utilizes ply by ply placement. Placement of the plies is limited in size by what size the technician can handle.

If an automated layup is performed, a pick and place end effector can be used to transport the composite material. However, different end effectors may be used for at least one of different types of composite material, different thicknesses of composite material, different shapes of composite material, or other differences. Removing, connecting, and aligning different end effectors can be undesirably time-consuming.

Therefore, it would be desirable to have a method and apparatus that takes into account at least some of the issues discussed above, as well as other possible issues. For example, it may be desirable to reduce the time of picking and placing composite material.

### SUMMARY

An example of the present disclosure provides an end effector configured to lift composite material through two different mechanisms. The end effector comprises a vacuum end effector with a plurality of vacuum pogos configured to pick and place a composite preform in contact with the plurality of vacuum pogos, and an electrostatic membrane configured to be removably held by the plurality of vacuum pogos and pick and place a single ply composite material while the electrostatic membrane is held by the plurality of vacuum pogos.

The electrostatic membrane may be electrically connected to the vacuum end effector to power the electrostatic membrane.

The end effector may further comprise a control system configured to selectively activate at least one of vacuum to the plurality of vacuum pogos or electricity to the electrostatic membrane.

The electrostatic membrane may comprise a membrane formed of an elastic material and a plurality of electrostatic pads. The plurality of electrostatic pads may form part of a material contact face of the elastic material, and an opposite face of the membrane may be a connection face configured to be held by the plurality of vacuum pogos. The plurality of electrostatic pads may be laid out in a repeating geometric pattern. The end effector may further comprise a second electrostatic membrane configured to be removably held by the plurality of vacuum pogos and pick and place a single ply composite material while the second electrostatic membrane is held by the plurality of vacuum pogos, wherein the second electrostatic membrane comprises a plurality of electrostatic pads laid out in a second repeating geometric pattern different from the repeating geometric pattern.

Another example of the present disclosure provides a method of picking and placing composite material using a single end effector with two different mechanisms. A single ply composite material is picked and placed using an electrostatic membrane held by a plurality of vacuum pogos of a vacuum end effector. The electrostatic membrane is released from the vacuum end effector. A composite preform is picked and placed using the plurality of vacuum pogos.

The step of pick and placing a single ply composite material using an electrostatic membrane held by a plurality of vacuum pogos of a vacuum end effector may include repeatedly placing single plies of composite material to form a stack of composite plies using an electrostatic membrane held by a plurality of vacuum pogos of a vacuum end effector, and the step of picking and placing a composite preform using the plurality of vacuum pogos may include lifting the stack of composite plies using the plurality of vacuum pogos.

Pick and placing the single ply composite material may comprise lifting, forming a curvature into the single ply composite material, and placing the composite material with the curvature.

Pick and placing the composite preform may comprise lifting, forming a curvature into the composite preform, and placing the composite preform with the curvature.

Releasing the electrostatic membrane from the vacuum end effector may comprise releasing vacuum from vacuum pogos of the vacuum end effector.

The method may further comprise connecting the electrostatic membrane to the vacuum end effector by pulling vacuum through vacuum pogos of the vacuum end effector in contact with the electrostatic membrane.

Yet another example of the present disclosure, that may be an addition to the above or below methods, provides a method of picking and placing composite material using a single end effector with two different mechanisms. A curvature is formed into a composite preform held using vacuum holding from a vacuum end effector. A curvature is formed into a single ply composite material held using electrostatic force from an electrostatic membrane held by the vacuum end effector.

The method may further comprise connecting the electrostatic membrane to the vacuum end effector by pulling vacuum through vacuum pogos of the vacuum end effector in contact with the electrostatic membrane.

Forming the composite preform may comprise pressing the composite preform against a forming tool using the vacuum end effector.

Forming the single ply composite material may comprise pressing the single ply composite material against a forming tool while the electrostatic membrane holds the single ply composite material to the vacuum end effector.

The method may further comprise connecting a second electrostatic membrane to the vacuum end effector by pulling vacuum through vacuum pogos of the vacuum end effector in contact with the electrostatic membrane, and the second electrostatic membrane may be configured to form different curvature.

A further example of the present disclosure provides a method of picking and placing composite material using a single end effector with two different mechanisms. Single plies of composite material are repeatedly placed using an electrostatic membrane held by a plurality of vacuum pogos of a vacuum end effector to form a stack of composite plies. The electrostatic membrane is released from the vacuum end effector. The stack of composite plies is lifted using the plurality of vacuum pogos.

The method may further comprise forming a curvature into each respective single ply composite material as the respective single ply composite material is held using electrostatic force from the electrostatic membrane held by the vacuum end effector.

The method may further comprise forming a curvature into the stack of composite plies by moving at least one vacuum pogo of the plurality of vacuum pogos.

The method may further comprise moving at least one vacuum pogo of the plurality of vacuum pogos to form a curvature into the vacuum end effector while the electrostatic membrane is held by the plurality of vacuum pogos.

The method may further comprise moving at least one vacuum pogo of the plurality of vacuum pogos to conform the plurality of vacuum pogos to a curved surface of a tool. Moving the at least one vacuum pogo of the plurality of vacuum pogos may form a curvature into the stack of composite plies. Moving the at least one vacuum pogo of the plurality of vacuum pogos may form a curvature into a single ply of composite material held by the electrostatic membrane.

The features and functions can be achieved independently in various examples of the present disclosure or may be combined in yet other examples in which further details can be seen with reference to the following description and drawings.

### BRIEF DESCRIPTION OF THE DRAWINGS

The novel features believed characteristic of the illustrative examples are set forth in the appended claims. The illustrative examples, however, as well as a preferred mode of use, further objectives and features thereof, will best be understood by reference to the following detailed description of an illustrative example of the present disclosure when read in conjunction with the accompanying drawings, wherein:
**Figure 1** is an illustration of an aircraft in accordance with an illustrative example;
**Figure 2** is an illustration of a block diagram of a manufacturing environment in accordance with an illustrative example;
**Figure 3** is an illustration of a side view of an electrostatic end effector in accordance with an illustrative example;
**Figure 4** is an illustration of a side view of a vacuum end effector pulling vacuum to connect an electrostatic membrane in accordance with an illustrative example;
**Figure 5** is an illustration of a side view of a vacuum end effector picking and placing a composite preform in accordance with an illustrative example;
**Figure 6** is an illustration of a side view of an electrostatic end effector picking and placing a composite ply in accordance with an illustrative example;
**Figure 7** is a flowchart of a method of picking and placing composite material using a single end effector with two different mechanisms in accordance with an illustrative example;
**Figure 8** is a flowchart of a method of picking and placing composite material using a single end effector with two different mechanisms in accordance with an illustrative example;
**Figure 9** is a flowchart of a method of picking and placing composite material using a single end effector with two different mechanisms in accordance with an illustrative example;
**Figure 10** is an illustration of an aircraft manufacturing and service method in a form of a block diagram in accordance with an illustrative example; and
**Figure 11** is an illustration of an aircraft in a form of a block diagram in which an illustrative example may be implemented.

### DETAILED DESCRIPTION

The illustrative examples recognize and take into account several considerations. The illustrative examples recognize and take into account that three-dimensional pick and place, also referred to as 3D Pick and Place (3D PnP) is the process of placing flat plies cut from a roll of fabric onto a curved tool. The fabric can be either pre-impregnated composite material (prepreg) or dry fabric.

The illustrative examples recognize and take into account that in an automated layup environment of dry carbon fabric in resin infusion applications, the pick and place end effector used is to pick the material is based on the form of the material. The illustrative examples recognize and take into account that single dry fabric plies or prepreg plies can be picked and placed using electrostatic adhesion. The illustrative examples recognize and take into account that vacuum adhesion can undesirably cause deformation of the ply. The illustrative examples recognize and take into account that vacuum adhesion can maintain a single ply in shape during picking and placing. The illustrative examples recognize and take into account that multiple plies that are consolidated prior to pick and best can be picked and placed using a vacuum end effector.

The illustrative examples recognize and take into account that changing between two different types of end effectors includes removing, replacing, and aligning entire end effectors and their frames. The illustrative examples recognize and take into account that removing and replacing different types of end effectors between pick and place operations can be undesirably time consuming. The illustrative examples recognize and take into account that storing two different kinds of end effectors can use an undesirable amount of manufacturing space, especially in space restricted environments. Using two different end effectors can instead use two separate mechanisms within the manufacturing environment for moving the end effectors, such as two industrial robots or two overhead gantries; this can be cost prohibitive.

The illustrative examples present one end effector that is capable of two types of adhesion for picking. The two different types of adhesion include vacuum suction and electrostatics. The illustrative examples allow for reduction of space and reduction of downtime due to elimination of changing two different types of end effectors. The illustrative examples provide one end effector with a switchable option to allow a vacuum end effector to be converted to an electrostatic end effector. The illustrative examples present an end effector that offers the ability to switch from vacuum based adhesion to electrostatic adhesion.

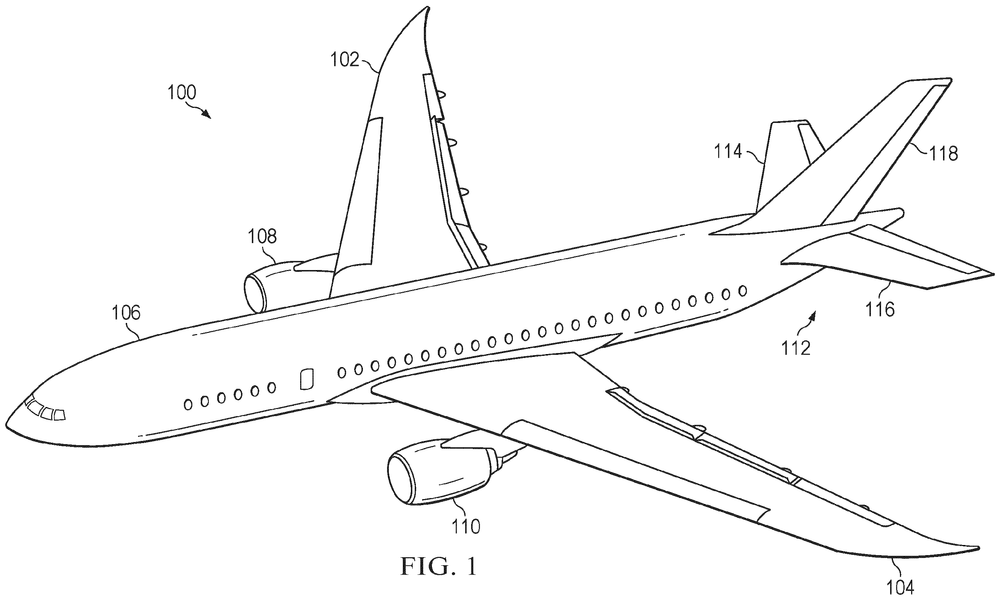

Turning now to **Figure 1****,** an illustration of an aircraft is depicted in accordance with an illustrative example. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft that can have composite materials formed using a pick and place end effector configured to lift through two different mechanisms. In some illustrative examples, an electrostatic end effector comprising a vacuum end effector with a plurality of vacuum pogos and an electrostatic membrane configured to be removably held by the plurality of vacuum pogos can be used to pick and place composite material in manufacturing a component of aircraft **100.**

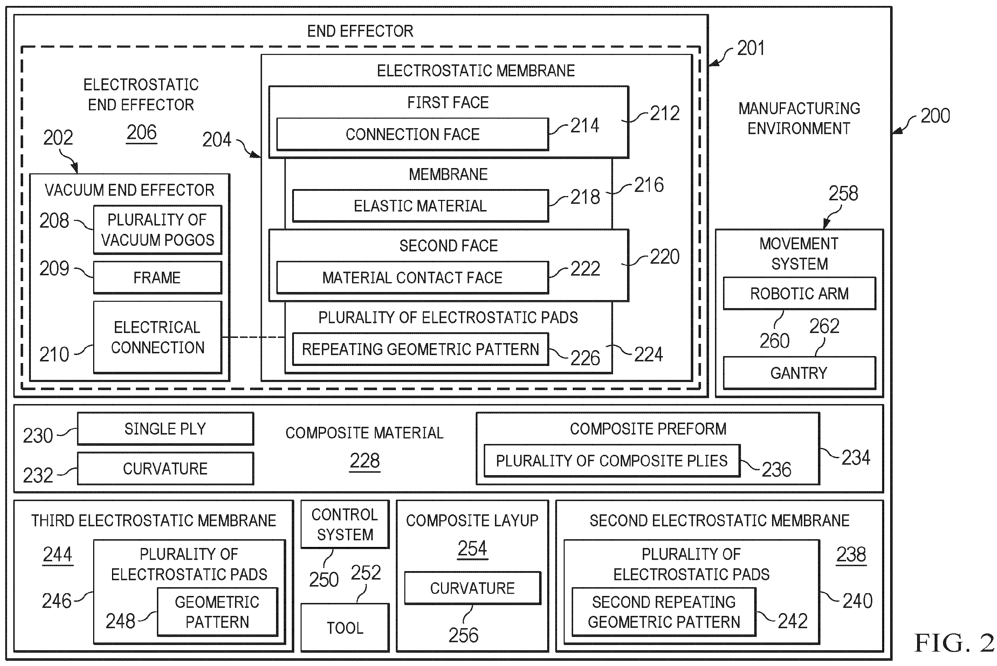

Turning now to **Figure 2****,** an illustration of a block diagram of a manufacturing environment is depicted in accordance with an illustrative example. End effector **201** can be used to pick and place composite material of aircraft **100** during manufacturing of aircraft **100.** End effector **201** is an end effector configured to lift composite material **228** through two different mechanisms. End effector **201** comprises vacuum end effector **202** with plurality of vacuum pogos **208** and electrostatic membrane **204** configured to be removably held by plurality of vacuum pogos **208.** Plurality of vacuum pogos **208** is configured to pick and place composite preform **234** in contact with plurality of vacuum pogos **208.** Electrostatic membrane **204** is configured to pick and place single ply **230** composite material **228** while electrostatic membrane **204** is held by plurality of vacuum pogos **208.** When vacuum end effector **202** holds electrostatic membrane **204,** end effector **201** takes the form of electrostatic end effector **206.**

Composite preform **234** comprises plurality of composite plies **236.** In some illustrative examples, composite preform **234** comprises plurality of composite plies **236** that is consolidated prior to pick and placing using vacuum end effector **202.**

Each of plurality of vacuum pogos **208** is independently extendable relative to frame **209** of vacuum end effector **202.** Each of plurality of vacuum pogos **208** is independently controllable to create a desired curvature. Each of plurality of vacuum pogos **208** is independently controllable to provide a vacuum to hold at least one of electrostatic membrane **204** or composite material **228** against plurality of vacuum pogos **208.**

In some illustrative examples, plurality of vacuum pogos **208** maintain a consistent positioning relative to frame **209** during picking and placing of composite material **228.** In some illustrative examples, plurality of vacuum pogos **208** will be moved relative to frame **209** to pick and place composite material **228** with a pre-existing curvature **232.** In some illustrative examples, plurality of vacuum pogos **208** are maintained in a planar position to pick and place a planar composite material **228.** In other illustrative examples, picking and placing composite material **228** includes placing curvature **232** into composite material **228.** In these illustrative examples, at least one vacuum pogo of plurality of vacuum pogos **208** will move relative to frame **209** to introduce curvature **232** into composite material **228.**

Electrostatic membrane **204** comprises first face **212** configured to be held by vacuum end effector **202** and second face **220** configured to contact composite material **228.** First face **212** and second face **220** are opposite faces of electrostatic membrane **204.** In some illustrative examples, first face **212** is referred to as connection face **214** as first face **212** connects electrostatic membrane **204** to vacuum end effector **202** to form electrostatic end effector **206.** In some illustrative examples, second face **220** is referred to as material contact face **222** as second face **220** is in contact with composite material **228** during pick and place operations using electrostatics.

Electrostatic membrane **204** is held by plurality of vacuum pogos **208** when vacuum is provided through plurality of vacuum pogos **208.** Plurality of vacuum pogos **208** interface with connection face **214.** In some illustrative examples, connection face **214** is substantially smooth in locations to interface with plurality of vacuum pogos **208.** In other illustrative examples, connection face **214** can include connection points to interface with plurality of vacuum pogos **208.** In some illustrative examples, the connection points comprise mechanical connectors configured to connect to plurality of vacuum pogos **208.**

Electrostatic membrane **204** comprises membrane **216** formed of elastic material **218** and plurality of electrostatic pads **224.** Elastic material **218** is sufficiently flexible to form curvature **232** in composite material **228.** Plurality of electrostatic pads **224** are configured to generate electrostatics to hold composite material **228** against electrostatic membrane **204.**

Plurality of electrostatic pads **224** form part of material contact face **222** of elastic material **218.** An opposite face of electrostatic membrane **204** is connection face **214** configured to be held by plurality of vacuum pogos **208.**

Electrostatic membrane **204** is electrically connected to vacuum end effector **202** by electrical connection **210** to power electrostatic membrane **204.** Electricity provided by electrical connection **210** is used by plurality of electrostatic pads **224** to generate electrostatics.

Plurality of electrostatic pads **224** is laid out to allow for forming curvature **232** in composite material **228** and electrostatic membrane **204.** In some illustrative examples, plurality of electrostatic pads **224** is laid out in repeating geometric pattern **226.** Different electrostatic pads can be used to form different curvatures into composite materials. Electrostatic membrane **204** can be exchanged with a different electrostatic membrane with a different pattern of electrostatic pads to form different curvatures. Vacuum end effector **202** is configured to utilize any desired electrostatic membrane.

In some illustrative examples, vacuum end effector **202** can removably hold second electrostatic membrane **238.** In some illustrative examples, electrostatic membrane **204** can be removed and replaced with second electrostatic membrane **238** configured to be removably held by plurality of vacuum pogos **208.** In some illustrative examples, second electrostatic membrane **238** comprises plurality of electrostatic pads **240** laid out in second repeating geometric pattern **242** different from repeating geometric pattern **226.** Different electrostatic membranes can be used to pick and place different sizes or shapes of composite material **228.** In some illustrative examples, different electrostatic membranes can be used to form different curvatures.

In some illustrative examples, third electrostatic membrane **244** can be removably held by plurality of vacuum pogos **208** of vacuum end effector **202.** Third electrostatic membrane **244** comprises plurality of electrostatic pads **246** laid out in geometric pattern **248** different from second repeating geometric pattern **242** and repeating geometric pattern **226.**

Electrostatic membrane **204** can be removed to use vacuum end effector **202** to pick and place composite material **228** using vacuum provided by plurality of vacuum pogos **208.** Frame **209** of vacuum end effector **202** can remain connected to a respective robotic arm, gantry, or other movement system in manufacturing environment **200** while end effector **201** picks and places using either vacuum or electrostatics. In some illustrative examples, frame **209** of vacuum end effector **202** remains connected to movement system **258** while picking and placing using either vacuum or electrostatics. In some illustrative examples, frame **209** of vacuum end effector **202** remains connected to robotic arm **260** or gantry **262.**

Electrostatic membrane **204** can be repeatedly held and released by vacuum end effector **202** as desired to form composite layup **254** on tool **252.** In some illustrative examples, at least one layer of composite layup **254** can be picked and placed by vacuum end effector **202** using plurality of vacuum pogos **208.** In some illustrative examples, at least one layer of composite layup **254** can be picked and placed by electrostatic end effector **206** using plurality of electrostatic membrane **204.**

In some illustrative examples, electrostatic end effector **206** can be used to repeatedly pick and place single layers of composite material **228** to form a stack of composite plies. In some illustrative examples, after forming the stack of composite plies, electrostatic membrane **204** is released and vacuum end effector **202** is used to pick and place the stack of composite plies.

In some illustrative examples, composite layup **254** has curvature **256.** In some illustrative examples, curvature **256** is formed in layers of composite layup **254** as each layer is applied to tool **252.** In other illustrative examples, curvature **256** can be applied to layers of composite layup **254** prior to applying the respective layer to tool **252.** In some illustrative examples, curvature **256** is applied to respective layers of composite layup **254** by applying pressure from at least one of vacuum end effector **202** or electrostatic membrane **204** to a forming tool.

Control system **250** is configured to selectively activate at least one of vacuum to plurality of vacuum pogos **208** or electricity to electrostatic membrane **204** of electrostatic end effector **206.** In some illustrative examples, control system **250** is used to control holding or releasing electrostatic membrane **204** from vacuum end effector **202.** In some illustrative examples, control system **250** is further configured to move plurality of vacuum pogos **208** to form curvature **232** in composite material **228.**

The illustration of manufacturing environment **200 in** **Figure 2** is not meant to imply physical or architectural limitations to the manner in which an illustrative example may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative example.

For example, in some illustrative examples, electrostatic membrane **204** and second electrostatic membrane **238** can be different from each other in ways in addition to the different geometric patterns. In some illustrative examples, at least one of a material or thickness of membrane **216** may be different than a membrane of second electrostatic membrane **238.** In other illustrative examples, surface areas of electrostatic membrane **204** and second electrostatic membrane **238** are different. As another example, although not depicted, end effector **201** can comprise a slip element between vacuum end effector **202** and electrostatic membrane **204** to enable movement of plies for conforming into a complex shape.

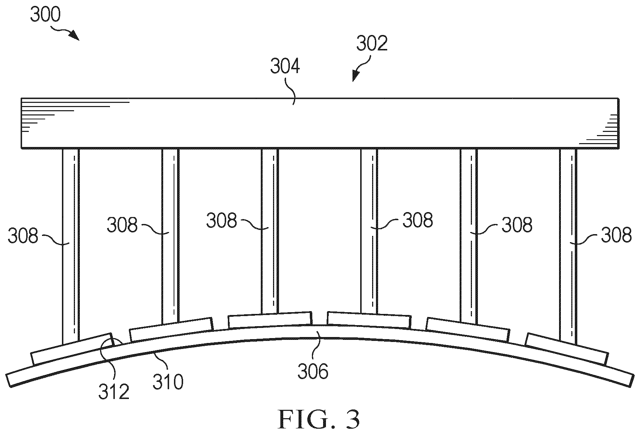

Turning now to **Figure 3****,** an illustration of a side view of an electrostatic end effector is depicted in accordance with an illustrative example. Electrostatic end effector **300** is a physical implementation of electrostatic end effector **206.** Electrostatic end effector **300** can be used to pick and place composite material of aircraft **100** during manufacturing of aircraft **100.** Electrostatic end effector **300** is an end effector configured to lift composite material through two different mechanisms. Electrostatic end effector **300** comprises vacuum end effector **302** with plurality of vacuum pogos **308** and electrostatic membrane **306** configured to be removably held by plurality of vacuum pogos **308.** Plurality of vacuum pogos **308** is configured to pick and place a composite preform in contact with plurality of vacuum pogos **308.** Electrostatic membrane **306** is configured to pick and place a single ply composite material while electrostatic membrane **306** is held by plurality of vacuum pogos **308.**

Each of plurality of vacuum pogos **308** is independently extendable relative to frame **304** of vacuum end effector **302.** Each of plurality of vacuum pogos **308** is independently controllable to create a desired curvature. Each of plurality of vacuum pogos **308** is independently controllable to provide a vacuum to hold at least one of electrostatic membrane **306** or a composite material. Although depicted in a curvature, plurality of vacuum pogos **308** can be positioned to pick and place a planar composite material or any other shape of composite material.

Although not visible in **Figure 3****,** electrostatic membrane **306** is electrically connected to vacuum end effector **302** to power electrostatic membrane **306.** Although not visible in **Figure 3****,** a control system configured to selectively activate at least one of vacuum to plurality of vacuum pogos **308** or electricity to electrostatic membrane **306** is connected to electrostatic end effector **300.** Electrostatic membrane **306** comprises a membrane formed of an elastic material and a plurality of electrostatic pads (not depicted).

The plurality of electrostatic pads form part of material contact face **310** of the elastic material. An opposite face of the membrane is connection face **312** configured to be held by plurality of vacuum pogos **308.** In some illustrative examples, the plurality of electrostatic pads are laid out in a repeating geometric pattern.

Electrostatic membrane **306** can be removed to use vacuum end effector **302** to pick and place a composite material using vacuum provided by plurality of vacuum pogos **308.** In some illustrative examples, electrostatic membrane **306** can be removed and replaced with a second electrostatic membrane (not depicted) configured to be removably held by plurality of vacuum pogos **308.** In some illustrative examples, the second electrostatic membrane comprises a plurality of electrostatic pads laid out in a second repeating geometric pattern different from the repeating geometric pattern. Different electrostatic membranes can be used to pick and place different sizes or shapes of composite materials. In some illustrative examples, different electrostatic membranes can be used to form different curvatures.

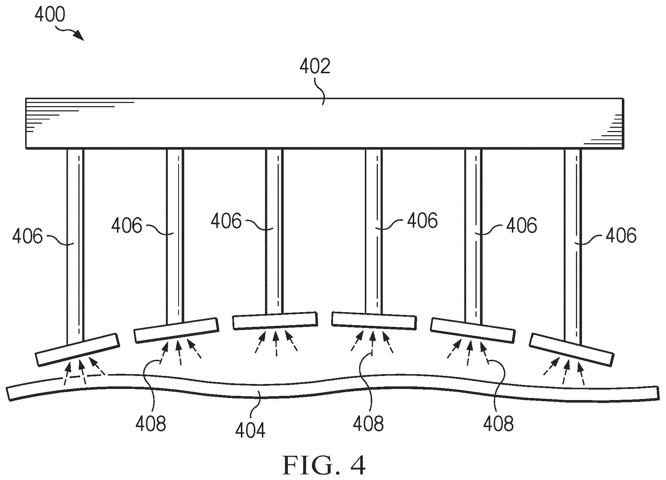

Turning now to **Figure 4****,** an illustration of a side view of a vacuum end effector pulling vacuum to connect an electrostatic membrane is depicted in accordance with an illustrative example. Vacuum end effector **402** is a physical implementation of vacuum end effector **202** of **Figure 2****.** In some illustrative examples, vacuum end effector **402** is the same as vacuum end effector **302** of **Figure 3****.** In view **400,** vacuum end effector **402** is not connected to or carrying electrostatic membrane **404.** Electrostatic membrane **404** is a physical implementation of electrostatic membrane **204** of **Figure 2****.**

In view **400,** vacuum **408** is provided to plurality of vacuum pogos **406** of vacuum end effector **402.** Vacuum **408** can be used to hold electrostatic membrane **404** by vacuum end effector **402.** When vacuum end effector **402** holds electrostatic membrane **404,** vacuum end effector **402** and electrostatic membrane **404** form an electrostatic end effector that can pick and place composite material using electrostatics. When vacuum end effector **402** is separate from electrostatic membrane **404,** vacuum end effector **402** can pick and place composite material using vacuum **408.** Although depicted in a curvature, plurality of vacuum pogos **406** can be positioned to pick and place a planar composite material or any other shape of composite material. Plurality of vacuum pogos **406** can be moved before lifting a composite material, while lifting a composite material, or as the composite material is placed on a tool.

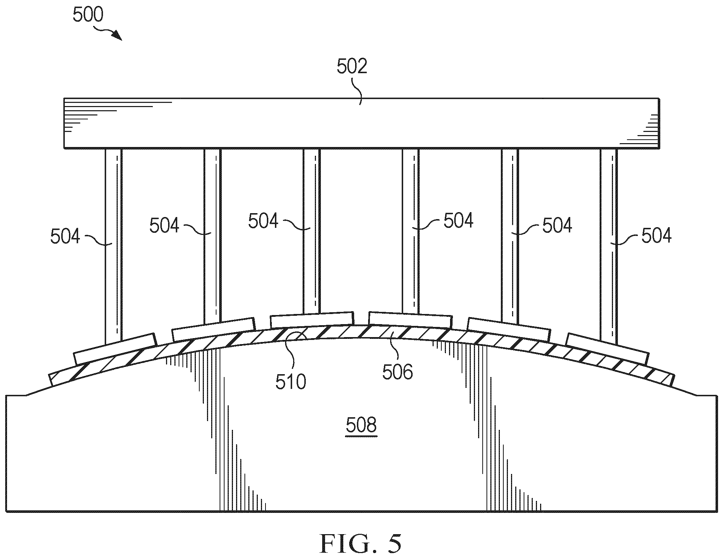

Turning now to **Figure 5****,** an illustration of a side view of a vacuum end effector picking and placing a composite preform is depicted in accordance with an illustrative example. Vacuum end effector **502** is a physical implementation of vacuum end effector **202 of** **Figure 2****.** In view **500,** vacuum end effector **502** has picked and placed composite preform **506.** In view **500,** vacuum end effector **502** holds composite preform **506** against plurality of vacuum pogos **504.** Vacuum (not depicted) is provided to plurality of vacuum pogos **504** to pick and place composite preform **506.**

In this illustrative example, vacuum end effector **502** is used to form a curvature into composite preform **506.** In other non-depicted examples, vacuum end effector **502** can be used to pick and place composite preform **506** or other composite material in a planar position. In other non-depicted examples, vacuum end effector **502** can be used to pick and place composite preform **506** or other composite material in a different curvature.

As depicted, vacuum end effector **502** is placing composite preform **506** against curved surface **510** of tool **508.** Composite preform **506** comprises a plurality of composite plies. Composite preform **506** is thicker and more rigid than a single composite ply. Vacuum end effector **502** provides sufficient support to maintain a curvature in composite preform **506.**

In some illustrative examples, a composite layup is formed on tool **508.** In some illustrative examples, tool **508** is a layup tool that receives a plurality of composite layers. In other illustrative examples, tool **508** is a shaping tool. In some illustrative examples, vacuum end effector **502** forms a curvature in composite preform **506** prior to placing composite preform **506** against tool **508.** In some illustrative examples, vacuum end effector **502** forms a curvature in composite preform **506** by moving plurality of vacuum pogos **504.** In some illustrative examples, vacuum end effector **502** forms a curvature in composite preform **506** by pressing composite preform **506** against curved surface **510** of tool **508.** In some illustrative examples, vacuum end effector **502** forms a curvature in composite preform **506** by pressing composite preform **506** against a shaping tool prior to placing composite preform **506** against tool **508.**

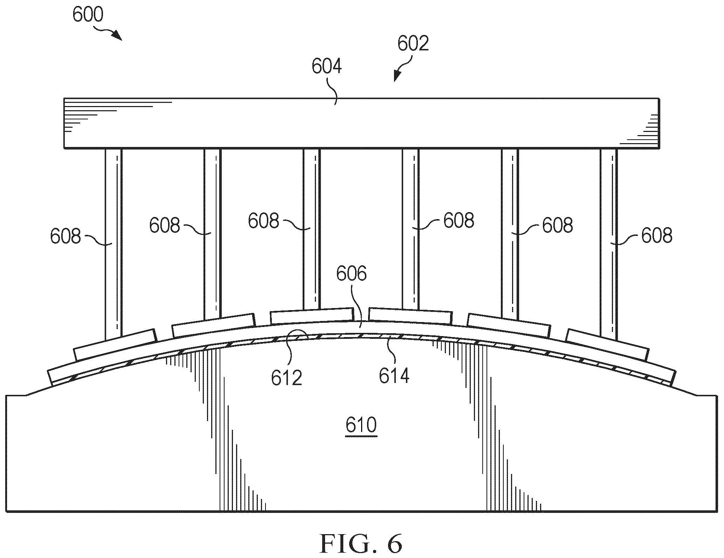

Turning now to **Figure 6****,** an illustration of a side view of an electrostatic end effector picking and placing a composite ply is depicted in accordance with an illustrative example. Electrostatic end effector **602** is a physical implementation of electrostatic end effector **206** of **Figure 2****.** In view **600,** electrostatic end effector **602** has picked and placed composite ply **614.** Electrostatic end effector **602** is an end effector configured to lift composite material through two different mechanisms. Electrostatic end effector **602** comprises vacuum end effector **604** with plurality of vacuum pogos **608** and electrostatic membrane **606** configured to be removably held by plurality of vacuum pogos **608.** In view **600,** electrostatic end effector **602** holds composite ply **614** against electrostatic membrane **606** using electrostatics. Electricity is provided to electrostatic membrane **606** by vacuum end effector **604** to pick and place composite ply **614.**

In this illustrative example, electrostatic end effector **602** is used to form a curvature into composite ply **614.** In other non-depicted examples, electrostatic end effector **602** can be used to pick and place composite ply **614** in a planar position. In other non-depicted examples, electrostatic end effector **602** can be used to pick and place composite ply **614** in a different curvature.

As depicted, electrostatic end effector **602** is placing composite ply **614** against curved surface **612** of tool **610.** Electrostatic end effector **602** provides sufficient support to maintain a curvature in composite ply **614.**

In some illustrative examples, a composite layup is formed on tool **610.** In some illustrative examples, tool **610** is a layup tool that receives a plurality of composite layers. In other illustrative examples, tool **610** is a shaping tool. In some illustrative examples, electrostatic end effector **602** forms a curvature in composite ply **614** prior to placing composite ply **614** against tool **610.** In some illustrative examples, electrostatic end effector **602** forms a curvature in composite ply **614** by moving plurality of vacuum pogos **608.** In some illustrative examples, electrostatic end effector **602** forms a curvature in composite ply **614** using vacuum end effector **604.** Electrostatic end effector **602** can form a curvature in composite ply **614** using vacuum end effector **604** by vacuum end effector **604** pressing composite ply **614** against a curved surface. In some illustrative examples, electrostatic end effector **602** forms a curvature in composite ply **614** by pressing composite ply **614** against curved surface **612** of tool **610.** In some illustrative examples, electrostatic end effector **602** forms a curvature in composite ply **614** by pressing composite ply **614** against a shaping tool prior to placing composite ply **614** against tool **610.**

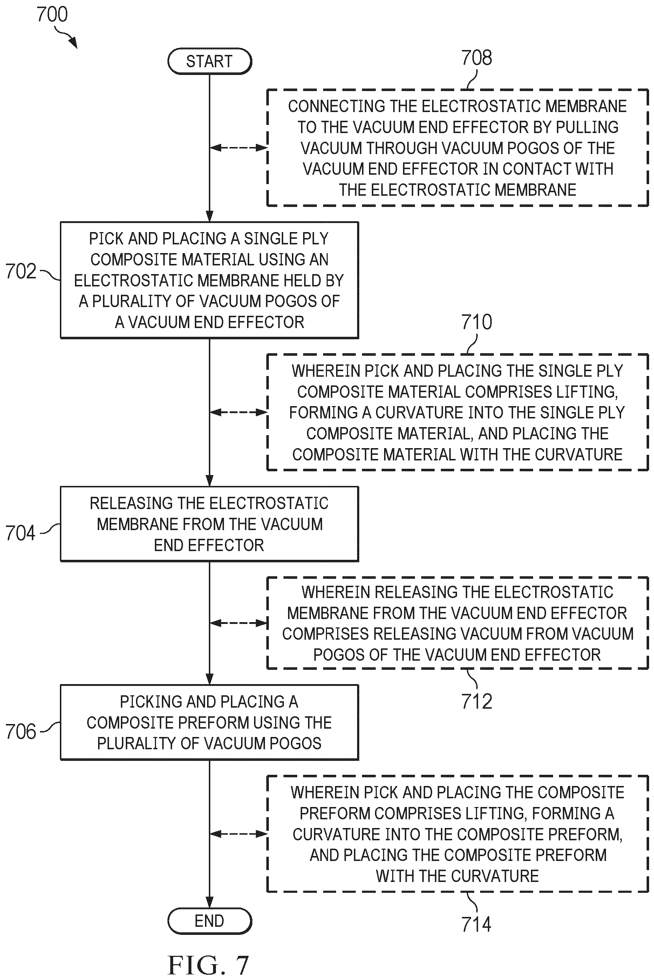

Turning now to **Figure 7****,** a flowchart of a method of picking and placing composite material using a single end effector with two different mechanisms is depicted in accordance with an illustrative example. Method **700** can be used to manufacture a composite component of aircraft **100.** Method **700** can be performed using vacuum end effector **202** and electrostatic membrane **204** of **Figure 2****.** Method **700** can be performed using vacuum end effector **302** and electrostatic membrane **306 of** **Figure 3****.** Method **700** can be performed using vacuum end effector **402** and electrostatic membrane **404** of **Figure 4****.** Method **700** can be performed using vacuum end effector **502** of **Figure 5****.** Method **700** can be performed using vacuum end effector **604** and electrostatic membrane **606** of **Figure 6****.**

Method **700** pick and places a single ply composite material using an electrostatic membrane held by a plurality of vacuum pogos of a vacuum end effector (operation **702).** The electrostatic membrane is held by vacuum provided the plurality of vacuum pogos of the vacuum end effector. While vacuum holds the electrostatic membrane, the end effector is an electrostatic end effector configured to pick and place composite material using electrostatics.

Method **700** releases the electrostatic membrane from the vacuum end effector (operation **704).** After releasing the electrostatic membrane, the end effector is configured to pick and place composite material using vacuum. After releasing the electrostatic membrane, the end effector is a vacuum end effector.

Method **700** pick and places a composite preform using the plurality of vacuum pogos (operation **706).** To pick and place the composite preform, vacuum is applied to the composite preform using vacuum supplied through the plurality of vacuum pogos. Afterwards, method **700** terminates.

In some illustrative examples, method **700** connects the electrostatic membrane to the vacuum end effector by pulling vacuum through a plurality of vacuum pogos of the vacuum end effector in contact with the electrostatic membrane (operation **708).** In some illustrative examples, a connection surface of the electrostatic membrane is smooth to allow for the plurality of vacuum pogos to hold the electrostatic membrane. In some illustrative examples, the connection surface of the electrostatic membrane has mechanical connectors to connect to the plurality of vacuum pogos.

In some illustrative examples, pick and placing the single ply composite material comprises lifting, forming a curvature into the single ply composite material, and placing the composite material with the curvature (operation **710).** In some illustrative examples, forming the curvature is performed by moving a plurality of vacuum pogos of the vacuum end effector. In some illustrative examples, forming the curvature is performed by pressing the single ply composite material against a shaping tool prior to placing the single ply composite material. In some illustrative examples, the single ply composite material is formed and placed onto a tool with a curved face to form the curvature in the single ply composite material as the single ply composite material is placed on the tool.

In some illustrative examples, releasing the electrostatic membrane from the vacuum end effector comprises releasing vacuum from a plurality of vacuum pogos of the vacuum end effector (operation **712).** In some illustrative examples, air is sent through the plurality of vacuum pogos to push the electrostatic membrane away from the plurality of vacuum pogos.

In some illustrative examples, pick and placing the composite preform comprises lifting, forming a curvature into the composite preform, and placing the composite preform with the curvature (operation **714).** In some illustrative examples, forming the curvature is performed by moving a plurality of vacuum pogos of the vacuum end effector. In some illustrative examples, forming the curvature is performed by pressing the composite preform against a shaping tool prior to placing the composite preform. In some illustrative examples, the composite preform is formed and placed onto a tool with a curved face to form the curvature in the composite preform as the composite preform is placed on the tool.

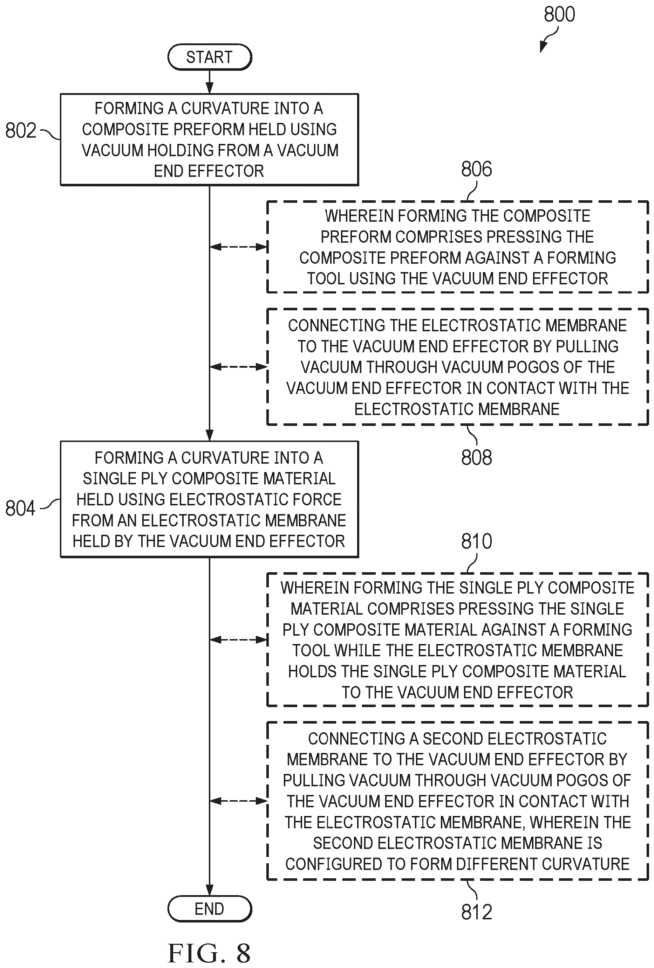

Turning now to **Figure 8****,** a flowchart of a method of picking and placing composite material using a single end effector with two different mechanisms is depicted in accordance with an illustrative example. Method **800** can be used to manufacture a composite component of aircraft **100.** Method **800** can be performed using vacuum end effector **202** and electrostatic membrane **204** of **Figure 2****.** Method **800** can be performed using vacuum end effector **302** and electrostatic membrane **306** of **Figure 3****.** Method **800** can be performed using vacuum end effector **402** and electrostatic membrane **404** of **Figure 4****.** Method **800** can be performed using vacuum end effector **502** of **Figure 5****.** Method **800** can be performed using vacuum end effector **604** and electrostatic membrane **606** of **Figure 6****.**

Method **800** forms a curvature into a composite preform held using vacuum holding from a vacuum end effector (operation **802).** In some illustrative examples, forming the curvature is performed by moving a plurality of vacuum pogos of the vacuum end effector. In some illustrative examples, forming the curvature is performed by pressing the composite preform against a shaping tool prior to placing the composite preform. In some illustrative examples, the composite preform is formed and placed onto a tool with a curved face to form the curvature in the composite preform as the composite preform is placed on the tool.

Method **800** forms a curvature into a single ply composite material held using electrostatic force from an electrostatic membrane held by the vacuum end effector (operation **804).** In some illustrative examples, forming the curvature is performed by moving a plurality of vacuum pogos of the vacuum end effector. In some illustrative examples, forming the curvature is performed by pressing the single ply composite material against a shaping tool prior to placing the single ply composite material. In some illustrative examples, the single ply composite material is formed and placed onto a tool with a curved face to form the curvature in the single ply composite material as the single ply composite material is placed on the tool. Afterwards, method **800** terminates.

In some illustrative examples, forming the composite preform comprises pressing the composite preform against a forming tool using the vacuum end effector (operation **806).** In some illustrative examples, method **800** connects the electrostatic membrane to the vacuum end effector by pulling vacuum through vacuum pogos of the vacuum end effector in contact with the electrostatic membrane (operation **808).**

In some illustrative examples, forming the single ply composite material comprises pressing the single ply composite material against a forming tool while the electrostatic membrane holds the single ply composite material to the vacuum end effector (operation **810).** In some illustrative examples, method **800** connects a second electrostatic membrane to the vacuum end effector by pulling vacuum through vacuum pogos of the vacuum end effector in contact with the electrostatic membrane, wherein the second electrostatic membrane is configured to form different curvatures (operation **812).**

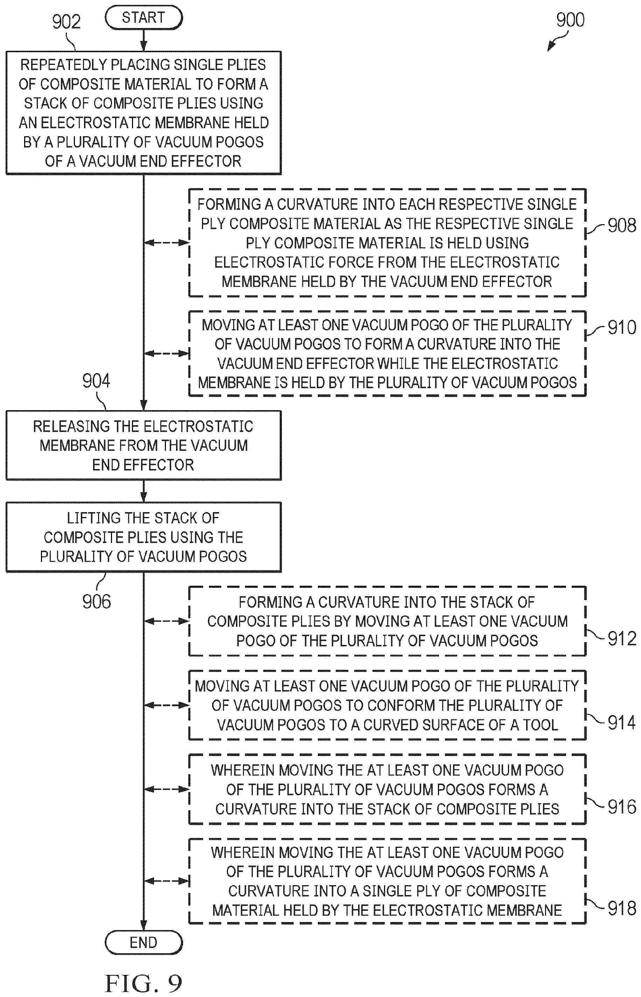

Turning now to **Figure 9****,** a flowchart of a method of picking and placing composite material using a single end effector with two different mechanisms is depicted in accordance with an illustrative example. Method **900** can be used to manufacture a composite component of aircraft **100.** Method **900** can be performed using vacuum end effector **202** and electrostatic membrane **204** of **Figure 2****.** Method **900** can be performed using vacuum end effector **302** and electrostatic membrane **306 of** **Figure 3****.** Method **900** can be performed using vacuum end effector **402** and electrostatic membrane **404** of **Figure 4****.** Method **900** can be performed using vacuum end effector **502** of **Figure 5****.** Method **900** can be performed using vacuum end effector **604** and electrostatic membrane **606** of **Figure 6****.**

Method **900** repeatedly places single plies of composite material to form a stack of composite plies using an electrostatic membrane held by a plurality of vacuum pogos of a vacuum end effector (operation **902).** Method **900** releases the electrostatic membrane from the vacuum end effector (operation **904).** Method **900** lifts the stack of composite plies using the plurality of vacuum pogos (operation **906).** Afterwards, method **900** terminates.

In some illustrative examples, method **900** forms a curvature into each respective single ply composite material as the respective single ply composite material is held using electrostatic force from the electrostatic membrane held by the vacuum end effector (operation **908).** A curvature can be formed into each respective single ply composite material at least one of during lifting, against a shaping tool, or as the vacuum end effector and electrostatic membrane places the respective single ply.

In some illustrative examples, method **900** moves at least one vacuum pogo of the plurality of vacuum pogos to form a curvature into the vacuum end effector while the electrostatic membrane is held by the plurality of vacuum pogos (operation **910).** In some illustrative examples, the curvature is formed into the vacuum end effector prior to lifting a respective single ply composite material. In some illustrative examples, the curvature is formed into the vacuum end effector during lifting a respective single ply composite material. In some illustrative examples, the curvature is formed into the vacuum end effector while placing a respective single ply composite material.

In some illustrative examples, method **900** forms a curvature into the stack of composite plies by moving at least one vacuum pogo of the plurality of vacuum pogos (operation **912).** In some illustrative examples, the curvature is formed into the stack of composite plies during lifting the stack of composite plies. In some illustrative examples, the curvature is formed into the stack of composite plies while placing the stack of composite plies.

In some illustrative examples, method **900** moves at least one vacuum pogo of the plurality of vacuum pogos to conform the plurality of vacuum pogos to a curved surface of a tool (operation **914).** In some illustrative examples, the tool is a shaping tool for forming a curvature into a composite material prior to placing the composite material. In some illustrative examples, the tool is a layup tool with a curved surface configured to receive composite material.

In some illustrative examples, moving the at least one vacuum pogo of the plurality of vacuum pogos forms a curvature into the stack of composite plies (operation **916).** In some illustrative examples, moving the at least one vacuum pogo of the plurality of vacuum pogos forms a curvature into a single ply of composite material held by the electrostatic membrane (operation **918).**

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C, or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted examples illustrate the architecture, functionality, and operation of some possible implementations of apparatuses and methods in an illustrative example. In this regard, each block in the flowcharts or block diagrams may represent at least one of a module, a segment, a function, or a portion of an operation or step.

In some alternative implementations of an illustrative example, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, operation **708** through operation **714** may be optional. As another example, operation **806** through operation **812** may be optional. As yet another example, operation **908** through operation **918** may be optional.

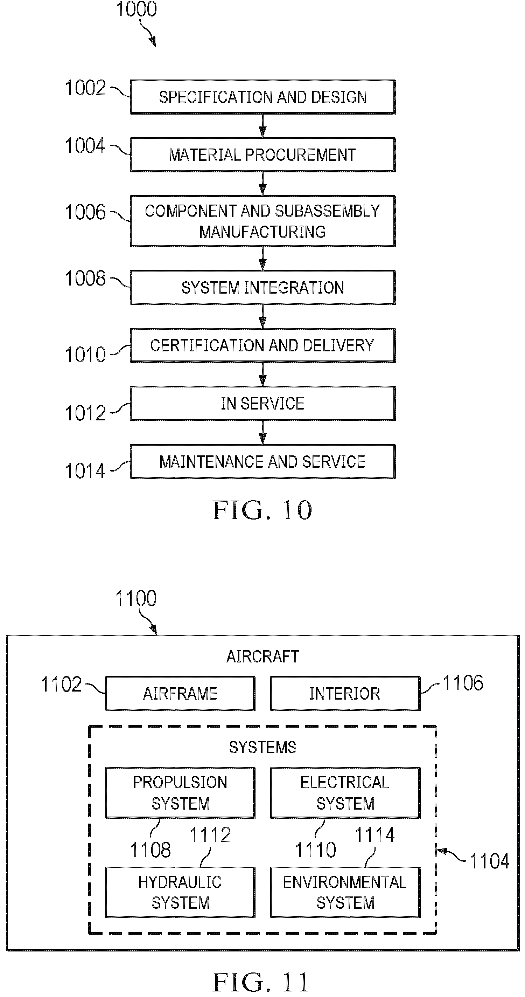

Illustrative examples of the present disclosure may be described in the context of aircraft manufacturing and service method **1000** as shown in **Figure 10** and aircraft **1100** as shown in **Figure 11****.** Turning first to **Figure 10****,** an illustration of an aircraft manufacturing and service method in a form of a block diagram is depicted in accordance with an illustrative example. During pre-production, aircraft manufacturing and service method **1000** may include specification and design **1002** of aircraft **1100** in **Figure 11** and material procurement **1004.**

During production, component and subassembly manufacturing **1006** and system integration **1008** of aircraft **1100** takes place. Thereafter, aircraft **1100** may go through certification and delivery **1010** in order to be placed in service **1012.** While in service **1012** by a customer, aircraft **1100** is scheduled for routine maintenance and service **1014,** which may include modification, reconfiguration, refurbishment, or other maintenance and service.

Each of the processes of aircraft manufacturing and service method **1000** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 11****,** an illustration of an aircraft in a form of a block diagram is depicted in which an illustrative example may be implemented. In this example, aircraft **1100** is produced by aircraft manufacturing and service method **1000 of** **Figure 10** and may include airframe **1102** with plurality of systems **1104** and interior **1106.** Examples of systems **1104** include one or more of propulsion system **1108,** electrical system **1110,** hydraulic system **1112,** and environmental system **1114.** Any number of other systems may be included.

Apparatuses and methods embodied herein may be employed during at least one of the stages of aircraft manufacturing and service method **1000.** One or more illustrative examples may be manufactured or used during at least one of component and subassembly manufacturing **1006,** system integration **1008,** in service **1012,** or maintenance and service **1014 of** **Figure 10****.**

The illustrative examples provide one end effector frame that can be used to provide two mechanisms for picking and placing composite material. The illustrative examples provide a vacuum end effector with vacuum suction cups located sporadically across that different pogos/actuators. A separate but removably connectable electrostatic membrane is provided. The electrostatic adhesion is provided as a separate part, the electrostatic membrane, that is picked up by the vacuum end effector. In some illustrative examples, electrical terminals are clipped in place to convert the pick surface of the end effector from vacuum to electrostatics.

In these illustrative examples, the end effector frame remains the same irrespective of the adhesion technology opted for in the pick and place process. An electrostatic membrane can be attached to an end effector using the vacuum cups of the vacuum end effector. The illustrative examples provide a dockable method to attach an electrostatic membrane to the end effector using vacuum cups. In the pick and place applications, the same end effector frame can be used with different electrostatic membranes. The shape and size of electrostatic pads can vary between electrostatic membranes. In some illustrative examples, the electrostatic pads take the form of triangles. The electrostatic pads can be tailored to the layup tool to receive composite material.

The illustrative examples provide a same end effector that can be used to pick and place using vacuum or pick and place using the electrostatic. The illustrative examples can reduce manufacturing downtime as there is no need to switch between two different end effectors for pick and place. In some illustrative eamples, the electrostatic can be used primarily for single ply dry fabric pick and place and the vacuum can be used for ply stack up pick and place. This is "a pick and place" system combining both vacuum and electrostatic end effectors. The end effector comprises pogos to extend to conform to contour to be picked up. In some illustrative examples, an electrostatic membrane (ES) is vacuum adhered to the end effector. The end effector can be used to pick and place contoured single plies for pick and place. In some illustrative examples, the end effectors comprises a slip element between the vacuum and electrostatic end effector to enable movement of plies for conforming into a complex shape. Vacuum adhesion to the electrostatic membrane can be stopped and then vacuum adhesion at the end of the pogos would allow adhesion to consolidated/tacked (multi-ply) structure.

The description of the different illustrative examples has been presented for purposes of illustration and description and is not intended to be exhaustive or limited to the examples in the form disclosed. Many modifications and variations will be apparent to those of ordinary skill in the art. Further, different illustrative examples may provide different features as compared to other illustrative examples. The example or examples selected are chosen and described in order to best explain the principles of the examples, the practical application, and to enable others of ordinary skill in the art to understand the disclosure for various examples with various modifications as are suited to the particular use contemplated.

The disclosure further comprises the following clauses:
1. An end effector configured to lift composite material through two different mechanisms comprising:
   a vacuum end effector with a plurality of vacuum pogos configured to pick and place a composite preform in contact with the plurality of vacuum pogos; and
   an electrostatic membrane configured to be removably held by the plurality of vacuum pogos and pick and place a single ply composite material while the electrostatic membrane is held by the plurality of vacuum pogos.
2. The end effector of clause 1, wherein the electrostatic membrane is electrically connected to the vacuum end effector to power the electrostatic membrane.
3. The end effector of clause 1 or 2, further comprising:
   a control system configured to selectively activate at least one of vacuum to the plurality of vacuum pogos or electricity to the electrostatic membrane.
4. The end effector of any one of clauses 1-3, wherein the electrostatic membrane comprises a membrane formed of an elastic material and a plurality of electrostatic pads.
5. The end effector of clause 4, wherein the plurality of electrostatic pads form part of a material contact face of the elastic material, and wherein an opposite face of the membrane is a connection face configured to be held by the plurality of vacuum pogos.
6. The end effector of clause 4 or 5, wherein the plurality of electrostatic pads are laid out in a repeating geometric pattern.
7. The end effector of clause 6, further comprising:
   a second electrostatic membrane configured to be removably held by the plurality of vacuum pogos and pick and place a single ply composite material while the second electrostatic membrane is held by the plurality of vacuum pogos, wherein the second electrostatic membrane comprises a plurality of electrostatic pads laid out in a second repeating geometric pattern different from the repeating geometric pattern.
8. A method of picking and placing composite material using a single end effector with two different mechanisms comprising:
   pick and placing a single ply composite material using an electrostatic membrane held by a plurality of vacuum pogos of a vacuum end effector;
   releasing the electrostatic membrane from the vacuum end effector; and
   picking and placing a composite preform using the plurality of vacuum pogos.
9. The method of clause 8, wherein pick and placing the single ply composite material comprises lifting, forming a curvature into the single ply composite material, and placing the composite material with the curvature.
10. The method of clause 8 or 9, wherein pick and placing the composite preform comprises lifting, forming a curvature into the composite preform, and placing the composite preform with the curvature.
11. The method of clause 8, wherein releasing the electrostatic membrane from the vacuum end effector comprises releasing vacuum from vacuum pogos of the vacuum end effector.
12. The method of any one of clauses 8-11, further comprising:
   connecting the electrostatic membrane to the vacuum end effector by pulling vacuum through vacuum pogos of the vacuum end effector in contact with the electrostatic membrane.
13. A method of picking and placing composite material using a single end effector with two different mechanisms comprising:
   forming a curvature into a composite preform held using vacuum holding from a vacuum end effector; and
   forming a curvature into a single ply composite material held using electrostatic force from an electrostatic membrane held by the vacuum end effector.
14. The method of clause 13, further comprising:
   connecting the electrostatic membrane to the vacuum end effector by pulling vacuum through vacuum pogos of the vacuum end effector in contact with the electrostatic membrane.
15. The method of clause 13 or 14, wherein forming the composite preform comprises pressing the composite preform against a forming tool using the vacuum end effector.
16. The method of any one of clauses 13-15, wherein forming the single ply composite material comprises pressing the single ply composite material against a forming tool while the electrostatic membrane holds the single ply composite material to the vacuum end effector.
17. The method of any one of clauses 13-16, further comprising:
   connecting a second electrostatic membrane to the vacuum end effector by pulling vacuum through vacuum pogos of the vacuum end effector in contact with the electrostatic membrane, wherein the second electrostatic membrane is configured to form different curvature.
18. A method of picking and placing composite material using a single end effector with two different mechanisms comprising:
   repeatedly placing single plies of composite material to form a stack of composite plies using an electrostatic membrane held by a plurality of vacuum pogos of a vacuum end effector;
   releasing the electrostatic membrane from the vacuum end effector; and
   lifting the stack of composite plies using the plurality of vacuum pogos.
19. The method of clause 18, further comprising:
   forming a curvature into each respective single ply composite material as the respective single ply composite material is held using electrostatic force from the electrostatic membrane held by the vacuum end effector.
20. The method of clause 18 or 19, further comprising:
   forming a curvature into the stack of composite plies by moving at least one vacuum pogo of the plurality of vacuum pogos.
21. The method of any one of clauses 18-20, further comprising:
   moving at least one vacuum pogo of the plurality of vacuum pogos to form a curvature into the vacuum end effector while the electrostatic membrane is held by the plurality of vacuum pogos.
22. The method of any one of clauses 18-21, further comprising:
   moving at least one vacuum pogo of the plurality of vacuum pogos to conform the plurality of vacuum pogos to a curved surface of a tool.
23. The method of clause 22, wherein moving the at least one vacuum pogo of the plurality of vacuum pogos forms a curvature into the stack of composite plies.
24. The method of clause 22 or 23, wherein moving the at least one vacuum pogo of the plurality of vacuum pogos forms a curvature into a single ply of composite material held by the electrostatic membrane.

## Claims

1. An end effector (201) configured to lift composite material (228) through two different mechanisms comprising:
a vacuum end effector (202, 302, 402, 502, 604) with a plurality of vacuum pogos (208, 308, 406, 504, 608) configured to pick and place a composite preform (234, 506) in contact with the plurality of vacuum pogos (208, 308, 406, 504, 608); and
an electrostatic membrane (204, 306, 404, 606) configured to be removably held by the plurality of vacuum pogos (208, 308, 406, 504, 608) and pick and place a single ply (230) composite material (228, 614) while the electrostatic membrane (204, 306, 404, 606) is held by the plurality of vacuum pogos (208, 308, 406, 504, 608).

2. The end effector (201) of claim 1, wherein the electrostatic membrane (204, 306, 404, 606) is electrically connected to the vacuum end effector (202, 302, 402, 502, 604) to power the electrostatic membrane (204, 306, 404, 606).

3. The end effector (201) of claim 1 or 2, further comprising:
a control system (250) configured to selectively activate at least one of vacuum to the plurality of vacuum pogos (208, 308, 406, 504, 608) or electricity to the electrostatic membrane (204, 306, 404, 606).

4. The end effector (201) of any one of claims 1-3, wherein the electrostatic membrane (204, 306, 404, 606) comprises a membrane (216) formed of an elastic material (218) and a plurality of electrostatic pads (224), preferably wherein:
the plurality of electrostatic pads (224) form part of a material contact face (222) of the elastic material (218), and wherein an opposite face of the membrane is a connection face (214) configured to be held by the plurality of vacuum pogos (208, 308, 406, 504, 608).

5. The end effector (201) of claim 4, wherein the plurality of electrostatic pads (224) are laid out in a repeating geometric pattern (226).

6. The end effector (201) of claim 5, further comprising:
a second electrostatic membrane (204, 306, 404, 606) configured to be removably held by the plurality of vacuum pogos (208, 308, 406, 504, 608) and pick and place a single ply (230) composite material (228, 614) while the second electrostatic membrane (204, 306, 404, 606) is held by the plurality of vacuum pogos (208, 308, 406, 504, 608), wherein the second electrostatic membrane (204, 306, 404, 606) comprises a plurality of electrostatic pads (240) laid out in a second repeating geometric pattern (242) different from the repeating geometric pattern (226).

7. A method (700) of picking and placing composite material (228) using a single end effector (201) with two different mechanisms comprising:
pick and placing (702) a single ply (230) composite material (228, 614) using an electrostatic membrane (204, 306, 404, 606) held by a plurality of vacuum pogos (208, 308, 406, 504, 608) of a vacuum end effector (202, 302, 402, 502, 604);
releasing (704) the electrostatic membrane (204, 306, 404, 606) from the vacuum end effector (202, 302, 402, 502, 604); and
picking and placing (706) a composite preform (234, 506) using the plurality of vacuum pogos (208, 308, 406, 504, 608).

8. The method (700) of claim 7, wherein:
(710) pick and placing the single ply (230) composite material (228, 614) comprises lifting, forming a curvature (232) into the single ply (230) composite material (228, 614), and placing the composite material (228) with the curvature (232); and/or
(714) pick and placing the composite preform (234, 506) comprises lifting, forming a curvature (232) into the composite preform (234, 506), and placing the composite preform (234, 506) with the curvature (232); and/or
(712) releasing the electrostatic membrane (204, 306, 404, 606) from the vacuum end effector (202, 302, 402, 502, 604) comprises releasing vacuum from vacuum pogos (208, 308, 406, 504, 608) of the vacuum end effector (202, 302, 402, 502, 604).

9. The method (700) of claim 7 or 8, further comprising:
connecting (708) the electrostatic membrane (204, 306, 404, 606) to the vacuum end effector (202, 302, 402, 502, 604) by pulling vacuum through vacuum pogos (208, 308, 406, 504, 608) of the vacuum end effector (202, 302, 402, 502, 604) in contact with the electrostatic membrane (204, 306, 404, 606).

10. A method (800) of picking and placing composite material (228) using a single end effector with two different mechanisms comprising:
forming (802) a curvature (232) into a composite preform (234, 506) held using vacuum holding from a vacuum end effector (202, 302, 402, 502, 604); and
forming (804) a curvature (232) into a single ply composite material (228) held using electrostatic force from an electrostatic membrane (204, 306, 404, 606) held by the vacuum end effector (202, 302, 402, 502, 604).

11. The method (800) of claim 10, further comprising:
connecting (808) the electrostatic membrane (204, 306, 404, 606) to the vacuum end effector (202, 302, 402, 502, 604) by pulling vacuum through vacuum pogos (208, 308, 406, 504, 608) of the vacuum end effector (202, 302, 402, 502, 604) in contact with the electrostatic membrane (204, 306, 404, 606).

12. The method (800) of claim 10 or 11, wherein:
(806) forming the composite preform (234, 506) comprises pressing the composite preform (234, 506) against a forming tool using the vacuum end effector (202, 302, 402, 502, 604); and/or
(810) forming the single ply (230) composite material (228, 614) comprises pressing the single ply (230) composite material (228, 614) against a forming tool while the electrostatic membrane (204, 306, 404, 606) holds the single ply (230) composite material (228, 614) to the vacuum end effector (202, 302, 402, 502, 604) .

13. The method (800) of any one of claims 10-12, further comprising:
connecting (812) a second electrostatic membrane (204, 306, 404, 606) to the vacuum end effector (202, 302, 402, 502, 604) by pulling vacuum through vacuum pogos (208, 308, 406, 504, 608) of the vacuum end effector (202, 302, 402, 502, 604) in contact with the electrostatic membrane (204, 306, 404, 606), wherein the second electrostatic membrane (204, 306, 404, 606) is configured to form a different curvature.

14. A method (900) of picking and placing composite material (228) using a single end effector (201) with two different mechanisms comprising:
repeatedly (902) placing single plies of composite material (228) to form a stack of composite plies using an electrostatic membrane (204, 306, 404, 606) held by a plurality of vacuum pogos (208, 308, 406, 504, 608) of a vacuum end effector (202, 302, 402, 502, 604);
releasing (904) the electrostatic membrane (204, 306, 404, 606) from the vacuum end effector (202, 302, 402, 502, 604); and
lifting (906) the stack of composite plies using the plurality of vacuum pogos (208, 308, 406, 504, 608).

15. The method (900) of claim 14, further comprising:
forming (908) a curvature (232) into each respective single ply composite material (228) as the respective single ply (230) composite material (228, 614) is held using electrostatic force from the electrostatic membrane (204, 306, 404, 606) held by the vacuum end effector (202, 302, 402, 502, 604); and/or
forming (912) a curvature (232) into the stack of composite plies by moving at least one vacuum pogo of the plurality of vacuum pogos (208, 308, 406, 504, 608); and/or
moving (910) at least one vacuum pogo of the plurality of vacuum pogos (208, 308, 406, 504, 608) to form a curvature (232) into the vacuum end effector (202, 302, 402, 502, 604) while the electrostatic membrane (204, 306, 404, 606) is held by the plurality of vacuum pogos (208, 308, 406, 504, 608); and/or
moving (914) at least one vacuum pogo of the plurality of vacuum pogos (208, 308, 406, 504, 608) to conform the plurality of vacuum pogos (208, 308, 406, 504, 608) to a curved surface of a tool, preferably wherein:
(916) moving the at least one vacuum pogo of the plurality of vacuum pogos (208, 308, 406, 504, 608) forms a curvature (232) into the stack of composite plies, and/or
(918) moving the at least one vacuum pogo of the plurality of vacuum pogos (208, 308, 406, 504, 608) forms a curvature (232) into a single ply (230) of composite material (228) held by the electrostatic membrane (204, 306, 404, 606).
